# EUROPEAN PATENT APPLICATION

(11) **EP 0 651 942 A1**
(43) Date of publication of application: **10.05.1995**
(21) Application number: 94203216.0
(22) Date of filing: 04.11.1994
(51) Int. Cl.: A01K 11/00

(54) **A tag for meat, suitable in particular as an ear tag**

(30) Priority: 05.11.1993 NL 9301924
(71) Applicant: Moolenaars, Jan Eric, NL-6881 NV Velp (NL)
(72) Inventor: Moolenaars, Jan Eric, NL-6881 NV Velp (NL)
(74) Representative: Smulders, Theodorus A.H.J., Ir.

(57) **Abstract**

A tag for meat, suitable in particular for use as an ear tag for livestock, such as pigs and cattle, sheep and goats, which tag comprises an insertion element (2), a counterelement (3) and recognition means (1), the insertion element comprising at least a metal tubular element (7) provided at one end with a supporting surface (8) extending substantially at right angles to the axis thereof and at the other end with a tapered portion (10) provided at the free end with a cutting edge, the counterface (3) being provided with an opening (17) through which it can be arranged fittingly over the tapered portion (10) at some distance from the supporting surface (8) , in such a manner that it can be secured thereto fittingly. The recognition means (1) are constituted by a one-piece synthetic tag plate provided at the exterior with a positive printing, which tag plate is, at least in mounted condition, rigidly connected to one of the parts of the tag with sealing effect.

## Description

The present invention relates to a tag for meat, suitable in particular for use as an ear tag for livestock, such as pigs and cattle, sheep and goats, which tag comprises an insertion element, a counterelement and recognition means, the insertion element comprising at least a metal tubular element provided at one end with a supporting surface extending substantially at right angles to the axis thereof and at the other end with a tapered portion provided at the free end with a cutting edge, the counterface being provided with an opening through which it can be arranged fittingly over the tapered portion at some distance from the supporting surface in such a manner that it can be secured thereto fittingly. Such a tag is supplied by Nederlandse Metaal- en Kunststofwarenfabriek Record B.V. at Velp (NL).

In the known tag the recognition means consist of a tag plate composed of a number of different layers, at least a supporting surface and a transparent film located at the outside being included. At the side facing the supporting plate the film is provided with a negative printing, and the supporting plate is provided with a recognition color. The insertion member is composed of a tubular element provided at one end with a collar and a somewhat tray-shaped receiving member provided with a central opening in the bottom. In mounted condition the tubular element extends through the opening, the collar abutting at the interior against the bottom of the tray-shaped receiving member. The composed tag plate is secured in the receiving member by beading the circumferential edge thereof around the tag plate. Thus, the insertion member is also attached.

This known tag is arranged in an ear, e.g., in the manner described below.

The insertion member and the countermember are laid in a special pair of tongs, after which the ear is received between the cutting edge of the tapered portion and the countermember. By closing the pair of tongs the cutting edge, and thus the tubular element, is pressed through the ear, providing a passage having a clean surface against which only the metal outer wall of the tubular element fittingly abuts. No hairs or such filth are received between the outer wall of the tubular element and the surface of the passage actually consisting of exposed meat which is therefore susceptible to infection. Moreover, with this tag synthetic parts thereof are prevented from coming into contact with the surface of the passage, which is of special importance with regard to temperature control and risk of infection.

By securing the countermember on the tapered portion at a fixed distance from the supporting surface, sufficient space remains therebetween for the ear, and the ear can even grow in thickness, since it is not jammed between the insertion member and the countermember.

The known tag has the disadvantage that it is composed of a large number of different parts, which results in an expensive and complicated production process. Moreover, the film has the disadvantage that it can be easily damaged, so that recognition of the tag and thus of the tagged animal becomes difficult or even impossible. Furthermore, by cutting loose the film along the longitudinal edge the film can be removed and replaced or provided with a new layer of differently printed film without this being immediately recognizable, with the result that the known tag is not quite fraud-proof.

The object of the invention is, therefore, to provide a tag of the type described in the opening paragraph, which is provided with only a limited number of parts and which, moreover, has a good sealing effect, thus being excellently fraud-proof and insusceptible to damage to the recognition means. To achieve this object, the tag according to the invention is characterized in that the recognition means are constituted by a one-piece synthetic tag plate provided at the exterior with a positive printing, which tag plate is, at least in mounted condition, rigidly connected to one of the parts of the tag with sealing effect.

In the tag according to the invention the number of parts is reduced as compared with the known tag, since the tag plate is made in one piece. Moreover, the tag plate can be simply arranged in one operation, and the printing cannot be removed independently of the synthetic part. Thus, replacement of the recognition means is immediately recognizable in the tag according to the invention. In fact, the synthetic tag plate, unlike the film of the known tag, cannot be removed without noticeable damage to the tag plate and/or the insertion member or countermember, at least cannot be replaced by another one without attracting notice. In this connection it is particularly advantageous to emboss the printing in the synthetic tag plate. This will further reduce the risk of damage to the printing and remove the possibility of replacement of the printing.

In a preferred embodiment of the tag according to the invention the number of parts is even further limited by making the insertion member in one piece as well. This has the advantage that it is not necessary to first arrange the insertion member in a receiving member before the tag plate can be placed. Thus, the tag according to the invention can be produced in an easier and less expensive manner. Moreover, the risk of incorrect assembly of the different parts will be further reduced.

In a number of variant embodiments of the tag according to the invention the tag plate is arranged on the insertion member or on the countermember in different ways.

In a first variant embodiment the supporting surface or the counterface is provided with a raised outer edge, the tag plate being fittingly received within the outer edge and the upper part of the outer edge being bent grippingly over the longitudinal edge of the tag plate at the top surface thereof. The tag plate can then only be removed after bending the bent edge and/or damaging the tag plate itself.

In a second variant embodiment the tag plate is provided with a click-fit edge which can cooperate with a counteredge of the insertion member or the countermember, the counteredge preferably being a cutting edge, in such a manner that when a loosening force is exerted on the tag plate in the direction of the top surface thereof the tag plate is damaged by the cutting counteredge. In this embodiment, therefore, the tag plate cannot be removed without being damaged, the additional advantage being obtained that the relevant counteredge is shielded by the synthetic tag plate and, consequently, cannot damage the meat, which is particularly of great importance when tagging living animals.

In a further variant embodiment the tag plate is provided at the bottom side with a rod-shaped element extending substantially at right angles thereto, which element is preferably fittingly received in the tubular element and is provided at the free end with a thickened portion abutting against the exterior of one of the ends of the tubular element. The thickened portion preferably extends over a part of the counterelement and abuts against the cutting edge of the tubular element, in such a manner that when a loosening force is exerted on the tag plate in the direction of the top surface thereof the thickened portion is damaged or even cut off by the cutting edge. As a result thereof, the countermember can be secured on the tubular element without the necessity of beading the tapered portion, simply by arranging the tag plate. Since the thickened portion abuts against the cutting edge of the tubular element, it cannot be removed without damage.

Besides, in nearly all the variant embodiments the tag plate can be arranged both on the insertion member and on the countermember. Furthermore, in different embodiments it is possible to integrate the countermember with the tag plate. Moreover, it is particularly advantageous to provide the tag with a responder preferably fitted in or under the tag plate, which responder can considerably simplify the recognition of the tagged animal.

By way of illustration of the invention a number of practical examples of the tag will be described with reference to the accompanying drawings, in which
Fig. 1 is an exploded perspective view of a tag according to the invention;
Fig. 2 is a sectional side view of a first embodiment of a tag according to the invention with a tag plate enclosed in a beaded edge;
Fig. 3 is a sectional side view of a second embodiment of a tag according to the invention with a glued tag plate;
Fig. 4 is a sectional side view of a third embodiment of a tag according to the invention with a tag plate secured by means of a click-fit edge;
Fig. 5 is a sectional side view of a fourth embodiment of a tag according to the invention with a tag plate secured through the tubular element;
Fig. 6 is a sectional side view of a fifth embodiment of a tag according to the invention having a tag plate as countermember.

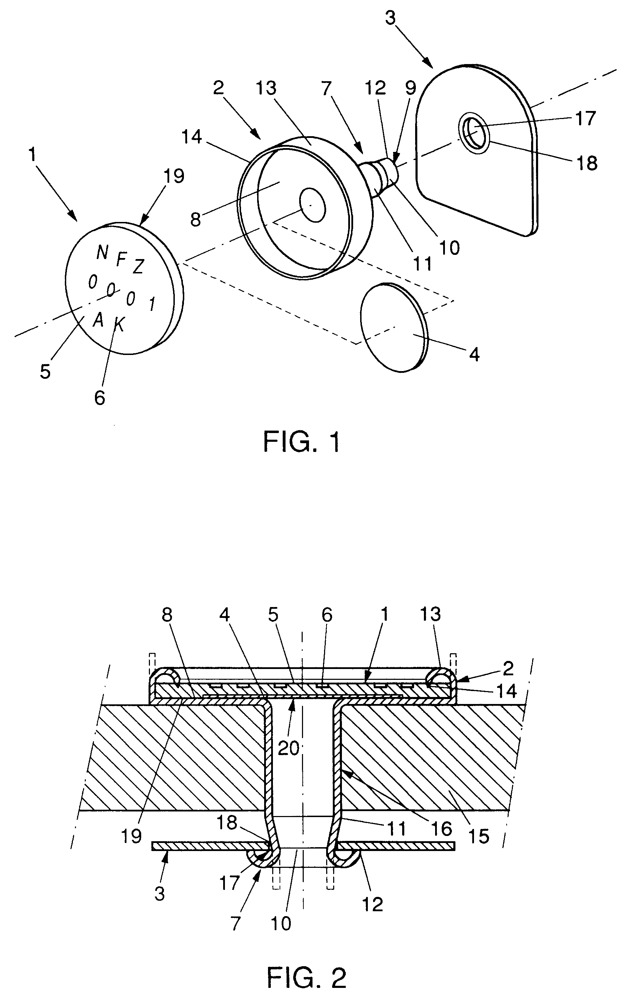

The tag shown in Fig. 1 has a tag plate 1, an insertion member 2, and a countermember 3. Moreover, a responder 4 is shown, which is optional. This responder is, e.g., a diode plate or a coil and may be arranged between the tag plate 1 and the insertion member 2.

The tag plate 1 is a one-piece plate of synthetic material and is cut out from, e.g., a plate or is injection molded, an embossed printing 6 being provided at at least one side 5. Each tag is unique because of a combination of the color of the tag plate 1 and the printing 6, which may consist of, e.g., a system of ciphers, letters and symbols designating a country, province or animal-specific number.

The insertion member 2 consists of a tubular member 7 to be designated as bush and a supporting surface 8 extending at one end thereof substantially at right angles to the axis of the bush 7. The bush 7 is provided near the free end 9 with a tapered portion 10, thus forming a shoulder 11 at some distance from the supporting surface 8. The longitudinal edge of the free end 9 of the tapered portion 10 is designed as a cutting edge 12. The outer longitudinal edge of the supporting surface is beaded towards the side facing away from the bush 7 to form a beaded edge 13, within which the tag plate 1 can be received.

The beaded edge 13 has such a height that, as shown in Fig. 2, it can be beaded over a tag plate 1 abutting against the supporting surface 8 and received within the edge 13, in such a manner that the upper longitudinal edge 14 of the beaded edge 13 abuts against the top side 5 of the tag plate 1 and presses the tag plate 1 against the supporting surface 8. Thus, the tag plate 1 cannot be removed from the insertion member 2 without bending back the beaded edge 13 or seriously damaging the tag plate 1. If the material for, in particular, the tag plate 1 is favorably chosen and the amount of pressure for the beaded edge 13 is appropriate, this beaded edge can be pressed slightly into the surface 5 of the tag plate 1, so that it cannot be removed without damaging both parts. When the tag plate 1 is made of a brittle synthetic material, it will break upon removal, thus preventing reuse.

Figs. 2 - 6 show variant embodiments of the tag according to the invention arranged in an ear of an animal. It is just as well possible, however, to use the tag for, e.g., tagging dead meat.

In the variant embodiment shown in Fig. 2 the insertion member 2, with the cutting edge 12 advanced, is pressed through the ear 15 of an animal by means of a pair of tongs or other tools known per se, not shown in the drawings. The passage 16 formed by the cutting edge 12 has a somewhat smaller cross-section than the bush 7, so that the ear abuts against the metal outer surface of the bush. When cutting the passage 16, any ear hairs of the animal are likewise cut off and removed to the outside, so that the cut surface of the ear is clean. This will minimize the risk of infections, certainly when clean tools and a clean tag are used. Partly because the bush 7 is made of metal, such as brass or steel, a good temperature control is obtained, among other things, and the ear 15 is prevented from being infected as a result of arranging the tag.

At the side of the ear 15 facing away from the supporting surface 8 a countermember 3 is arranged in the form of a flat plate member. The countermember 3 is provided with an opening 17 which can be fittingly arranged on the tapered portion 10 of the bush 7, in such a manner that in arranged condition the countermember 3 abuts with the edge 18 of the opening 17 against the shoulder 11. The part of the tapered portion 10 of the bush 7 projecting beyond the countermember 3 is beaded over in such a manner that the cutting edge 12 abuts against the surface of the countermember 3 located at the side facing away from the supporting surface 8. Consequently, the countermember 3 is rigidly connected to the insertion member 2 and thus to the tag plate 1, the tag being rigidly connected to the ear 15 by enclosing the ear 15 between the supporting surface 8 and the countermember 3. Since the countermember 3 cannot be moved farther than the shoulder 11 on the bush 7, the ear is not jammed between the members, but there remains sufficient room for the ear to freely increase at least in thickness, e.g. during further growth of the animal.

At the bottom side 19 of the tag plate 1 a recess 20 is provided, in which a responder 4 is placed. This responder consists of, e.g., a diode plate, a coil or a magnet plate. Since the tag plate 1 is made of synthetic material, the action of the responder 4 when enclosed between the supporting surface 8 and the tag plate 1 is not adversely affected. Besides, such a responder can of course also be partly or completely received within the bush 7 so as to obtain a very specific working range.

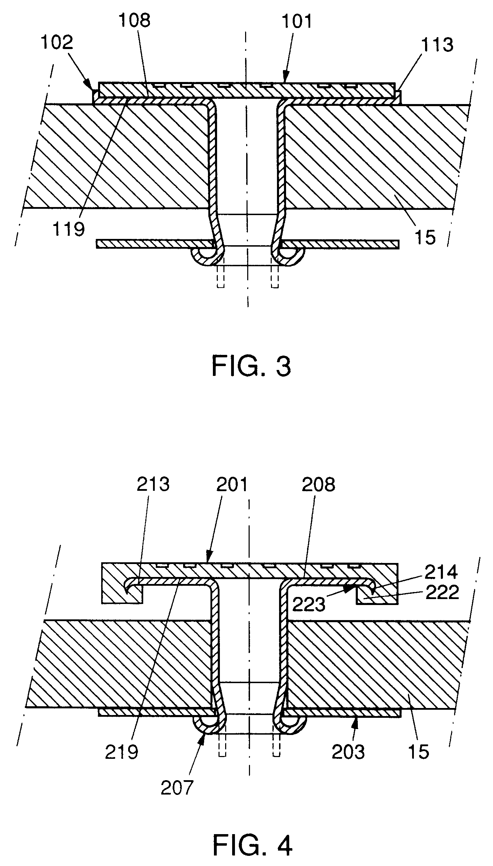

Fig. 3 is a variant embodiment in which the tag is arranged in the ear 15 in a manner corresponding to the method of attachment as shown in Fig. 2. In this variant embodiment the supporting surface 108 is provided with a relatively low longitudinal edge 113 bent over in upward direction. This longitudinal edge 113 is clearly lower than the thickness of the tag plate 101. In this variant embodiment the tag plate 101 is glued to the supporting surface 108 at least with the lower side 119 and therefore cannot be removed without damage from at least one of these members 101, 108. This variant embodiment has the advantage that the supporting surface 108 needs to be provided with a low circumferential edge 113 only, so that the production of the insertion member 102 is considerably easier and requires less material. Moreover, during production of the tag the upper longitudinal edge 113 need not be beaded over, as in the variant embodiment shown in Fig. 1. Besides, the supporting surface 108 can also be designed without a raised longitudinal edge.

Fig. 4 is a further variant embodiment which is again attached in the ear 15 of an animal in a comparable manner as discussed above. In this variant embodiment the supporting surface 208 has a smaller surface than the tag plate 201, the longitudinal edge 213 of the supporting surface 208 being bent over downwards and finished as a cutting edge 214. The bottom side 219 of the tag plate 201 is provided with a circular raised edge 222 having therein a likewise circular slot 223 in which the longitudinal edge 213 of the supporting surface can be fittingly received. The raised edge 222 is relatively thin near the cutting edge 214, and the tag plate 201 is tightly fitted around the supporting surface, in such a manner that the cutting edge 219 causes a notch in the side of the slot 223 facing away from the bottom side 219 of the tag plate 201.

When in the variant embodiment shown in Fig. 4 a loosening pulling or pushing force is exerted of the tag plate 201 in the direction away from the bush 207, the raised edge 222 will be damaged by the cutting longitudinal edge 214, so that inappropriate manipulations carried out with the tag will immediately be manifest.

This variant embodiment of the tag according to the invention has the advantage that the supporting surface may be relatively small and simple, so that the production is simple and inexpensive and requires little material. Moreover, the longitudinal edge 213 of the supporting surface 208 is enclosed within the tag plate, so that the ear 15 of the animal is prevented from being damaged by this longitudinal edge.

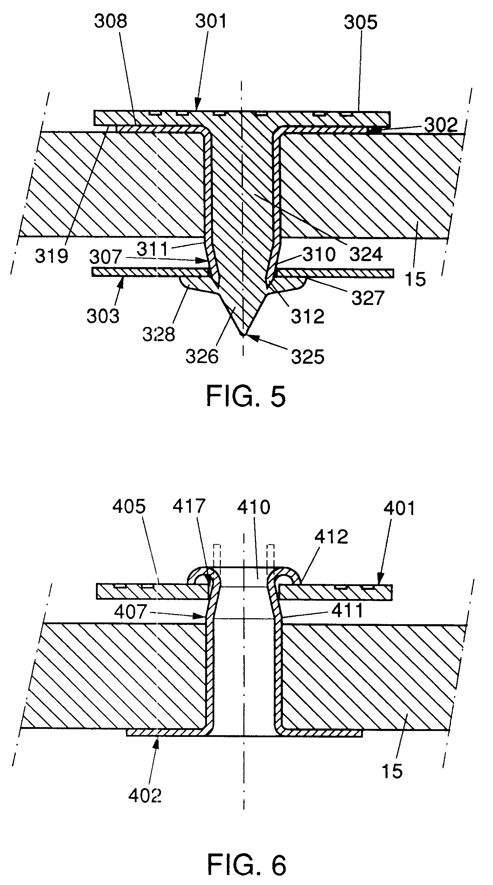

In the variant embodiment shown in Fig. 5 the insertion member 302 is provided with a bush 307 having a relatively short tapered portion 310 and a flat supporting surface 308 having a smaller surface than the tag plate 301. At the bottom side 319 the tag plate 301 is provided with a rod-shaped member being at right angles thereto and to be designated as pin 324, which rod-shaped member is provided at the free end 325 with a thickened portion 326. This thickened portion 326 is more or less shaped like a cone, the top of which is located near the free end 325, the thickened portion 326 being provided near the base 327 with a circular lip 328 extending at right angles to the axis of the pin 324.

When the tag has been arranged in an ear 15 of an animal in about the manner described above, the countermember 303 abuts against the shoulder 311, the tapered portion 310 projecting beyond the countermember 303 only with the cutting edge 312. The pin 324 extends through the bush 307, the tag plate 301 abutting with the bottom side 318 against the supporting surface 308. The tag plate 301 may optionally be glued to the supporting surface 308. The thickened portion 326 projects in its entirety beyond the bush 307 and extends with the protruding lip 328 over the cutting edge 312 of the bush 307 and at least a part of the surface of the countermember 303, so that the countermember 303 is pressed against the shoulder 311.

When in the variant embodiment shown in Fig. 5 a loosening pulling or pushing force is exerted on the tag plate 301 in the direction away from the bush 307, the thickened portion 326 and in particular the circular lip 328 will be damaged by the cutting edge 312, so that inappropriate manipulations carried out with the tag will immediately be manifest.

This variant embodiment has the advantage that the tapered member 310 can be relatively short and that, moreover, the supporting surface 308 can be relatively small, so that little material is required and, moreover, the production of the insertion member 302 is simple. This variant embodiment has the further advantage that the countermember 303 is secured by means of the tag plate 301, so that it is not necessary to bead the tapered portion 310, the tag is of simple design and, moreover, does not remain attached in the ear when frauds are carried out with the tag plate 301, because then the thickened portion 326 is cut loose in part and thus the countermember 303 becomes detached from the insertion member 302.

Fig. 6 shows a variant embodiment of the tag according to the invention, in which the tag only comprises an insertion member 402 and a tag plate 401, apart from a responder optionally included in the tag plate 401, not shown in the figure. The insertion member 402 is inserted with the tapered portion 410 of the bush 407 through an opening 417 in the tag plate 401, in such a manner that the tag plate 401 abuts against the shoulder 411. The cutting edge 412 of the tapered portion 410 is beaded at the top side 405 of the tag plate 401, the cutting edge 412 being pressed against or even slightly into the top side 405, so that the tag plate 401 is pressed against the shoulder 411.

This variant embodiment shown in Fig. 6 has the advantage that the tag needs to be composed of only two parts, so that the manufacture and assembly can be carried out in a very simple and advantageous manner. When the tag plate 401 is removed, the tag falls out of the ear in its entirety, so that frauds carried out with the tag will immediately be manifest. Moreover, the tag plate 401 cannot be removed without damaging the insertion member 402. Besides, a separate countermember 403 can be received between the shoulder 411 and the tag plate 401, thus maintaining the advantage that the tag plate 401 cannot be removed without the tag becoming detached from the ear in its entirety.

The invention is by no means limited to the variant embodiments given in the drawings and the specification. Thus, the tag plate can be attached both to the insertion member and to the countermember, and the tag plate can be provided at both sides with a printing, so that the assembly is very simple. Furthermore, the insertion member can be arranged from the top surface of the tag plate through an opening provided therein, the supporting surface having a small surface and extending on the top surface of the tag plate. Producing the tag in accordance with the invention will result in a tag of simple design, which is simple to produce, user-friendly and relatively inexpensive, and the manufacture of which requires little material, which tag minimizes the risk of infection of the meat in which it is arranged.

## Claims

1. A tag for meat, suitable in particular for use as an ear tag for livestock, such as pigs and cattle, sheep and goats, which tag comprises an insertion element, a counterelement, and recognition means, the insertion element comprising at least a metal tubular element provided at one end with a supporting surface extending substantially at right angles to the axis thereof and at the other end with a tapered portion provided at the free end with a cutting edge, the counterface being provided with an opening through which it can be arranged fittingly over the tapered portion at some distance from the supporting surface, in such a manner that it can be secured thereto fittingly, characterized in that the recognition means are constituted by a one-piece synthetic tag plate provided at the exterior with a positive printing, which tag plate is, at least in mounted condition, rigidly connected to one of the parts of the tag with sealing effect.

2. A tag according to claim 1, characterized in that the printing is embossed.

3. A tag according to claim 1 or 2, characterized in that the insertion member is made in one piece.

4. A tag according to any of claims 1 - 3, characterized in that the supporting surface or the counterface is provided with a raised outer edge, the tag plate being fittingly received within the outer edge and the upper part of the outer edge being bent grippingly over the longitudinal edge of the tag plate at the top surface thereof.

5. A tag according to any of the preceding claims, characterized in that the tag plate is attached at least by gluing.

6. A tag according to any of the preceding claims, characterized in that the tag plate is provided with a click-fit edge which can cooperate with a counteredge of the insertion member or the countermember, the counteredge being a cutting edge, in such a manner that when a loosening force is exerted on the tag plate in the direction of the top surface thereof the tag plate is damaged by the cutting counteredge.

7. A tag according to any of the preceding claims, characterized in that the tag plate is provided at the bottom side with a rod-shaped element extending substantially at right angles thereto, which element is fittingly received in the tubular element.

8. A tag according to claim 7, characterized in that the rod-shaped element is provided at the free end with a thickened portion abutting against the exterior of one of the ends of the tubular element.

9. A tag according to claim 8, characterized in that the thickened portion extends over a part of the counterelement and abuts against the cutting edge of the tubular element, in such a manner that when a loosening force is exerted on the tag plate in the direction of the top surface thereof the thickened portion is damaged by the cutting edge.

10. A tag according to any of the preceding claims, characterized in that the tag plate is integrated with the counterface.

11. A tag according to any of the preceding claims, characterized in that the tag plate is provided with an opening fittingly arranged over the tapered portion, which tapered portion is beaded fittingly on the top surface of the tag plate over the longitudinal edge of the opening.

12. A tag according to any of the preceding claims, characterized in that the tag plate is made of synthetic material which contracts under the action of heat.

13. A tag according to any of the preceding claims, characterized in that the tag is provided with a responder, in particular arranged under or in the tag plate.
